# EUROPEAN PATENT APPLICATION

(11) **EP 4 783 195 A1**
(43) Date of publication of application: **29.07.2026**
(21) Application number: 24834583.7
(22) Date of filing: 29.11.2024
(51) Int. Cl.: G21C 21/00, G21C 3/58, G21C 3/62, C01F 17/10

(54) **PREPARATION METHOD FOR MOX FUEL POWDER**

(30) Priority: 30.07.2024 CN 202411035138; 30.07.2024 CN 202411035133; 30.07.2024 CN 202411030777
(71) Applicant: China Institute of Atomic Energy, Beijing 102413 (CN)
(72) Inventor: ZHANG, Yan, Beijing 102413 (CN); LIU, Qian, Beijing 102413 (CN); TIAN, Guoxin, Beijing 102413 (CN); YANG, Suliang, Beijing 102413 (CN); ZHU, Liyang, Beijing 102413 (CN); YANG, Qi, Beijing 102413 (CN)
(74) Representative: Isarpatent
(86) International application number: PCT/CN2024/135556
(87) International publication number: WO 2026/025744

(57) **Abstract**

The embodiments of the present application provide a method for preparing MOX fuel powders comprising various kinds of actinide nuclide oxides, wherein the method comprises steps of: S1. mixing different actinide nuclide salts with urea to form a mixed actinide deep eutectic solvent, wherein the actinide nuclide salt is one selected from the group consisting of a hexavalent actinide nitrate, a tetravalent actinide nitrate, a hexavalent actinide oxalate, and a tetravalent actinide oxalate; S2. heating the mixed actinide deep eutectic solvent obtained in step S1 to a first predetermined temperature to subject the mixed actinide deep eutectic solvent to a deamination treatment so as to remove the urea therein; and S3. heating a product obtained after the deamination in step S2 to a second predetermined temperature to subject the product obtained in step S2 to a denitrogenation treatment and/or a decarbonization treatment so as to obtain various kinds of actinide nuclide oxides. The embodiments of the present application provide a simple method for preparing MOX fuel powders, which does not generate any waste liquid, is more economical and green, and can obtain a completely homogeneous MOX fuel powder.

## Description

### Technical Field

The embodiments of the present application relate to the technical field of preparing nuclear fuels, and particularly to a method for preparing MOX fuel powders.

### Background

Mixed oxide (MOX) fuel is one of the most interested nuclear fuel types at home and abroad, and is one of the key links in realizing the closed cycle of nuclear fuel and the sustainable development of nuclear energy. In MOX fuel manufacturing processes, the quality of the powder, especially the macroscopic and microscopic homogeneities of the ingredients and isotope composition, affects the performance of the subsequent pellets directly. Therefore, how to prepare a homogeneous mixed MOX powder has been one of focuses of the MOX fuel production research.

Currently, according to different powder mixing approaches, methods for producing MOX powders are mainly classified into two kinds: a mechanical blending process (commonly known as a "dry method" ) and a chemical co-precipitation process (commonly known as a "wet method"). The dry method was first used for the production of a fast reactor MOX fuel with a higher PuO₂ content. Researchers in France and Belgium used a two-step mixing process, i.e., the Micronized Master Blend (MIMAS) process, which may be used for the production of Light Water Reactor (LWR) MOX fuel with a lower PuO₂ content. The dry process has a high difficulty in operations and high requirements on the equipment and process parameters. The wet process may obtain product homogeneity and form a solid solution powder. The wet process includes an Ammonium Uranyl Plutonyl Carbonate (AUPuC) coprecipitation process and so on. However, the wet process has longer procedure, generates a large amount of waste liquid.

### Summary

A brief summary on the present application is presented below to provide a basic understanding of certain aspects of the present application. It should be understood that this summary is not intended to exclusively describe the present application. It is neither intended to determine the critical or essential parts of the present application, nor intended to limit the scope of the present application. The purpose is merely to provide some concepts in a simplified way, which serve as a preamble part for further detailed description discussed later.

The embodiments of the present application provide a method for preparing MOX fuel powders comprising various kinds of actinide nuclide oxides, wherein the method comprises steps of: S1. mixing different actinide nuclide salts with urea to form a mixed actinide deep eutectic solvent, wherein the actinide nuclide salt is one selected from the group consisting of a hexavalent actinide nitrate, a tetravalent actinide nitrate, a hexavalent actinide oxalate, and a tetravalent actinide oxalate; S2. heating the mixed actinide deep eutectic solvent obtained in step S1 to a first predetermined temperature to subject the mixed actinide deep eutectic solvent to a deamination treatment so as to remove the urea therein; and S3. heating a product obtained after the deamination in step S2 to a second predetermined temperature to subject the product obtained in step S2 to a denitrogenation treatment and/or a decarbonization treatment so as to obtain various kinds of actinide nuclide oxides.

In the embodiments of the present application, tetravalent/hexavalent actinide nitrates and tetravalent/hexavalent actinide oxalates are used to form a mixed actinide deep eutectic solvent with urea, and then the mixed actinide deep eutectic solvent is subjected to a deamination treatment, a denitrogenation treatment and a decarbonization treatment to obtain various kinds of MOX fuel powders. The embodiments of the present application provide a novel method for preparing MOX fuel powders, which can achieve homogeneous mixing of elemental composition macroscopically and microscopically (at molecular level).

Also, in the method provided by the present invention, the raw materials are simple, where tetravalent/hexavalent actinide nitrates and tetravalent/hexavalent actinide oxalates are directly used as raw materials, which can greatly simplify the process for preparing AnO₂ type MOX fuel powders, reduce the use of process reagents, while the method does not generate any process waste liquid. Therefore, the present invention provides a simple method for preparing MOX fuel powders, which has a high production efficiency, does not generate any waste liquid, is more economical and green, and can obtain completely homogeneous MOX fuel powders.

### Brief Description of Drawings

In order to further explain the above and other advantages and features of the present application, particular embodiments of the present application will be further described in detail below with reference to the drawings. The drawing along with the detailed description below are together included in the specification and form a part of the specification.
Fig. 1 is a diagram showing the comparison of the flow process of a preparation method provided in the embodiments of the present application with those of a dry process and a wet process for preparing MOX fuel powders.
Fig. 2 is a graph showing the corresponding relationship between the melting point of a mixture of uranyl nitrate hexahydrate and urea and the molar content of urea, and photographs of mixtures formed from uranyl nitrate hexahydrate and urea at different molar ratios at the room temperature.
Fig. 3a is a Secondary Electron Imaging (SEI) image of the sample surface of the MOX fuel powder prepared in Example 1 of the present invention.
Fig. 3b is a characteristic X-ray (Mα1 line) surface scanning map of the U element in the MOX fuel powder prepared in Example 1 of the present invention.
Fig. 3c is a characteristic X-ray (Mα1 line) surface scanning map of the Th element in the MOX fuel powder prepared in Example 1 of the present invention.
Fig. 3d is an Energy-dispersive X-ray spectroscopy (EDS) layered image of the MOX fuel powder prepared in Example 1 of the present invention, that is, a stacked image of Fig. 3a to Fig. 3c.
Fig. 4a is a SEI image of the sample surface of the MOX fuel powder prepared in Example 2 of the present invention.
Fig. 4b is a characteristic X-ray (Mα1 line) surface scanning map of the U element in the MOX fuel powder prepared in Example 2 of the present invention.
Fig. 4c is a characteristic X-ray (Mα1 line) surface scanning map of the Th element in the MOX fuel powder prepared in Example 2 of the present invention.
Fig. 4d is an EDS layered image of the MOX fuel powder prepared in Example 2 of the present invention, that is, a stacked image of Fig. 4a to Fig. 4c.
Fig. 5a is a SEI image of the sample surface of the MOX fuel powder prepared in Example 3 of the present invention.
Fig. 5b is a characteristic X-ray (Mα1 line) surface scanning map of the U element in the MOX fuel powder prepared in Example 3 of the present invention.
Fig. 5c is a characteristic X-ray (Mα1 line) surface scanning map of the Th element in the MOX fuel powder prepared in Example 3 of the present invention.
Fig. 5d is an EDS layered image of the MOX fuel powder prepared in Example 3 of the present invention, that is, a stacked image of Fig. 5a to Fig. 5c.

### Detailed Description

The exemplary embodiments of the present application will be described below with reference to the drawings. For the purpose of clarity and simplicity, not all the features of the practical embodiments will be described in the specification. However, it should be understood that during the development of any of such practical embodiments, many determinations specific to the embodiments should be made to achieve the particular goal of the developer, for example, to meet those limiting conditions related to the system and business, and those limiting conditions may vary depending on various embodiments. Furthermore, it should also be understood that although the development work may be very complicated and time-consuming, such development work is merely a routine task for those skilled in the art benefiting from the disclosure of the present application.

Furthermore, it should be noted that in order to avoid obscuring the present application due to unnecessary details, only the device structures and/or process steps closely associated to the embodiments of the present application are shown in the drawings, while other details which are not relevant to the present application are omitted.

It should be noted that unless otherwise defined, the technical terms or scientific terms used in the present application should have usual meanings understood by a person of ordinary skills in the art.

In the description of the embodiments of the present application, unless specifically and particularly defined otherwise, "various kinds of" refers to at least two, for example, two, three kinds and so on.

The embodiments of the present application provide a method for preparing MOX fuel powders comprising various kinds of actinide nuclide oxides.

The method according to the embodiments of the present application comprises the following steps: step S1 to step S3.

S1. mixing different actinide nuclide salts with urea to form a mixed actinide deep eutectic solvent, wherein the actinide nuclide salt is one selected from the group consisting of a hexavalent actinide nitrate, a tetravalent actinide nitrate, a hexavalent actinide oxalate, and a tetravalent actinide oxalate.

S2. heating the mixed actinide deep eutectic solvent obtained in step S1 to a first predetermined temperature to subject the mixed actinide deep eutectic solvent to a deamination treatment so as to remove the urea therein.

S3. heating a product obtained after the deamination in step S2 to a second predetermined temperature to subject the product obtained in step S2 to a denitrogenation treatment and/or a decarbonization treatment so as to obtain various kinds of actinide nuclide oxides.

In the embodiments of the present application, tetravalent/hexavalent actinide nitrates and tetravalent/hexavalent actinide oxalates are used to form a mixed actinide deep eutectic solvent with urea, and then the mixed actinide deep eutectic solvent is subjected to a deamination treatment, a denitrogenation treatment and a decarbonization treatment to obtain various kinds of MOX fuel powders. The embodiments of the present application provide a novel method for preparing MOX fuel powders, which can achieve homogeneous mixing of elemental composition macroscopically and microscopically (at molecular level).

In the method provided by the present invention, the raw materials are simple, where tetravalent/hexavalent actinide nitrates, tetravalent/hexavalent actinide oxalates, and the like are directly used as raw materials, which can greatly simplify the process for preparing AnO₂ type MOX fuel powders.

In step S1, mixing different actinide nuclide salts with urea means mixing the actinide nuclide salts of at least two kinds of different nuclides with urea to ensure that the mixed actinide deep eutectic solvent formed comprises at least two kinds of actinides.

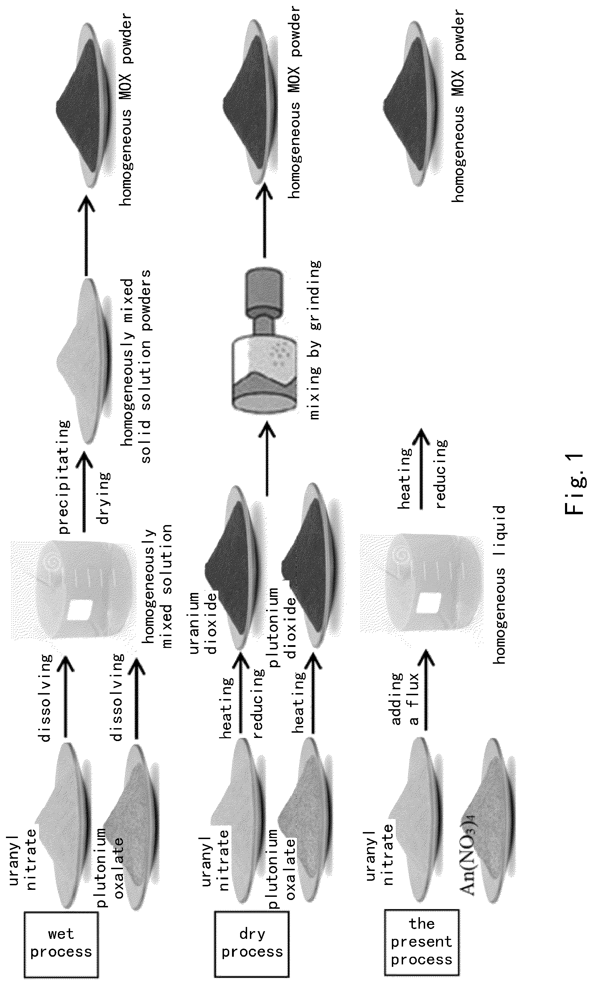

Fig. 1 is a diagram showing the comparison of the flow process of a preparation method provided in the embodiments of the present application with those of a dry process and a wet process for preparing MOX fuel powders. As can be seen from Fig. 1, the method provided in the embodiments of the present application reduces the process flow, and forms a mixed actinide deep eutectic solvent only by adding urea, without producing any process waste liquid, as compared to the existing wet process and dry process. Therefore, the method is a process with a simple procedure and an easy operation, which can reduce the use of process reagents, simplify the operation procedure, and does not need any additional device, thereby reducing the production cost and increasing the production efficiency.

In some embodiments, in step S1, after the different actinide nuclide salts are mixed with urea, the mixed actinide nuclide salts and urea are formed into a completely clear liquid, i.e., the mixed actinide deep eutectic solvent, by at least one manner in shaking, stirring, grinding, sonicating and heating.

In some embodiments, when the mixed actinide deep eutectic solvent to be prepared has a large sample amount (for example, the total weight of the mixed actinide deep eutectic solvent is from several grams to tens of grams), the mixing may be carried out by grinding in a mortar. The grinding operation generally comprises grinding while rotating the pestle in a large extent, which can provide a better stirring effect.

In some embodiments, in step S1, during the mixing of the different actinide nuclide salts and the urea solid, the mixture formed from the actinide nuclide salts and urea may be heated to allow the actinide nuclide salts and urea to be mixed homogeneously, thereby obtaining a completely clear mixed actinide deep eutectic solvent.

In some embodiments, in step S1, the particular approach for heating comprises heating the mixture formed from the actinide nuclide salts and urea on an electric heating plate at 80 to 100°C for about 5 to 10 minutes.

In some embodiments, when there are insoluble substances remained after heating the mixture formed from the actinide nuclide salts and urea, the completely clear mixed actinide deep eutectic solvent may be obtained by adding a small amount of deionized water to the mixture and sonicating or shaking it. The deionized water added has a maximum amount that is 6 times greater than the molar amount of the metal ions, and can vaporize during the deamination.

In some embodiments, in step S2, the first predetermined temperature in a range from 150 to 160°C. Within this temperature range, the urea in the mixed actinide deep eutectic solvent may be removed. When a small amount of deionized water is added to obtain a completely clear mixed actinide deep eutectic solvent in step S1, the small amount of deionized water added may also be removed in step S2.

In some embodiments, in step S2, the mixed actinide deep eutectic solvent is heated to 150-160°C according to a specified program and maintained at that temperature for 30 min or longer to obtain a deaminated powder comprising different actinide nuclide salts. When the actinide nuclide salts comprise a tetravalent actinide nitrate, the deaminated powder further comprises actinide nuclide oxides formed after removal of nitrate by thermal decomposition of a small portion of tetravalent/hexavalent actinide nitrates.

Specifically, in step S2, the mixed actinide deep eutectic solvent was transferred to a crucible with a pipette or dropper, and the crucible is heated to 150-160 °C according to a specified program and maintained at that temperature for 30 min or longer to remove the urea in the mixed actinide deep eutectic solvent. The resultant deaminated powder comprises different actinide nuclide salts which are mixed homogeneously, and actinide nuclide oxides formed after removal of nitrate by thermal decomposition of a portion of tetravalent/hexavalent actinide nitrates in the different actinide nuclide salts.

In some embodiments, the deamination is carried out in an air or argon atmosphere. In some embodiments, the expression "according to a specified program" means at a specified heating rate, and the specified heating rate may be, for example, 5 to 10°C/min.

In some embodiments, in step S3, the second predetermined temperature is 500°C or higher. In some embodiments, in step S3, the denitrogenation treatment and/or the decarbonization treatment are carried out in an air or argon atmosphere.

In step S3, the deaminated powder is heated to the second predetermined temperature according to a specified program and maintained at that temperature for 30 min or longer. In some embodiments, in step S3, the expression "according to a specified program" means at a specified heating rate, and the specified heating rate is 5 to 10°C/min.

In some embodiments, the hexavalent actinide nitrate is a solid of uranyl nitrate hexahydrate. In some embodiments, the tetravalent actinide nitrate is a solid of thorium nitrate hexahydrate, a solid of plutonium nitrate pentahydrate, or a solid of U(NO₃)₄·3-4H₂O. In some embodiments, the tetravalent actinide oxalate is a solid of thorium(IV) oxalate hexahydrate, a solid of plutonium(IV) oxalate hexahydrate, or a solid of U(IV) oxalate. Herein, (IV) means the actinide nuclide in its corresponding actinide nitrate or actinide oxalate is tetravalent.

In the method provided in the present invention, the raw materials are simple, where plutonium nitrate/thorium nitrate/U(VI) nitrate/U(IV) nitrate, plutonium(IV) oxalate/thorium(IV) oxalate/U(IV) oxalate, and the like are directly used as raw materials, which can greatly simplify the process for preparing MOX fuel powders of AnO₂ type ((ThₓPu₁₋ₓ)O₂, (UₓTh₁₋ₓ)O₂, (UₓPu₁₋ₓ)O₂, or the like).

The deep eutectic solvent (DES) is typically composed of two or three kinds of components, and is usually obtained by mixing metal salts and a hydrogen bond donor. The components are connected to each other by forming a hydrogen bond, and have a smaller lattice energy, such that the melting point of the eutectic mixture is lower than the melting point of any component existing alone. The lower the melting point of the eutectic mixture, the more stable the deep eutectic solvent is at the room temperature, which is more advantageous for preparing homogeneously mixed MOX fuel powders.

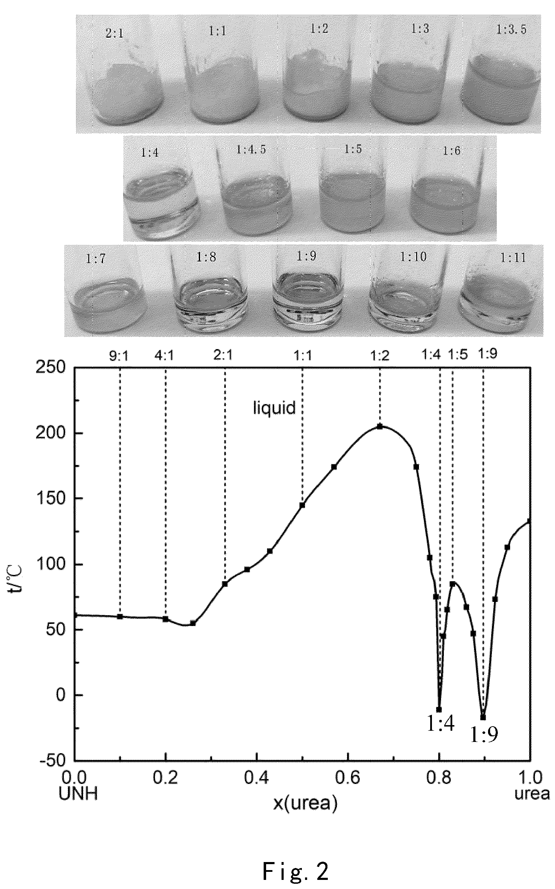

Reference is made to Fig. 2, which is a graph showing the corresponding relationship between the melting point of a mixture of uranyl nitrate hexahydrate and urea and the molar content of urea, and photographs of mixtures formed from uranyl nitrate hexahydrate and urea at different molar ratios at the room temperature. In Fig. 2, the ordinate represents to the melting point of the mixture of uranyl nitrate and urea, and the abscissa represents the molar ratio of urea in the mixture.

As can be seen from Fig. 2, a deep eutectic solvent with a melting point below the room temperature can be formed when the molar ratio of metal ions to urea in the mixture of uranyl nitrate and urea is 1:9 and 1:4.

The deep eutectic solvent with a molar ratio of metal ions to urea in the deep eutectic solvent of 1:9 may be simply referred to as a 1-9 type deep eutectic solvent, and the deep eutectic solvent with a molar ratio of metal ions to urea in the deep eutectic solvent of 1:4 may be simply referred to as a 1-4 type deep eutectic solvent. As also can be seen from Fig. 2, the 1-4 type deep eutectic solvent and the 1-9 type deep eutectic solvent are clear liquids at the room temperature.

The eutectic point (temperature) of the 1-4 type deep eutectic solvent and the 1-9 type deep eutectic solvent is above 0°C, which facilitates the storing of the deep eutectic solvent at normal temperature.

During the practice of the present invention, the inventors have found through investigation that a deep eutectic solvent with a melting point below the room temperature can also be formed when the molar ratio of an actinide nuclide salt mixture comprising at least two kinds of different nuclides (where the actinide nuclide salt may be a tetravalent/hexavalent actinide nitrate or a tetravalent/hexavalent actinide oxalate) to urea is 1:4 or 1:9.

Therefore, in some embodiments, in the mixed actinide deep eutectic solvent, the molar ratio of metal ions of all the actinide nuclide salts to urea is 1:4 or 1:9.

When the molar ratio of metal ions of all the actinide nuclide salts to urea is 1:4 or 1:9, the mixed actinide deep eutectic solvent prepared in the present invention has very stable properties, and only one additive, i.e., urea, is needed, which is readily available, has a low cost, and may be completely removed when heated to around 160°C.

The inventors of the present application have further found that the 1-9 type deep eutectic solvent can be stable for several months at the room temperature, and its stability is better than that of the 1-4 type deep eutectic solvent. In some embodiments, in the mixed actinide deep eutectic solvent, the molar ratio of metal ions of all the actinide nuclide salts to urea is 1:9.

In some embodiments, in step S1, two kinds of actinide nuclide salts are mixed with urea to form a mixed actinide deep eutectic solvent, wherein a first actinide nuclide salt is a tetravalent actinide nitrate, and a second actinide nuclide salt is a tetravalent actinide oxalate. In such embodiments, the mixed actinide deep eutectic solvent formed may be referred to as a first mixed actinide deep eutectic solvent.

In some embodiments, the first actinide nuclide salt for forming the first mixed actinide deep eutectic solvent is a solid of plutonium nitrate pentahydrate, a solid of thorium nitrate hexahydrate, or a solid of U(NO₃)₄·3-4H₂O; and the second actinide nuclide salt is a solid of thorium(IV) oxalate hexahydrate, a solid of plutonium(IV) oxalate hexahydrate, or a solid of U(IV) oxalate.

In some embodiments, in the first mixed actinide deep eutectic solvent formed, the concentration of the tetravalent actinide oxalate incorporated is 9.0 At% (atomic percentage).

In step S3, the denitrogenation treatment and/or the decarbonization treatment are carried out in an air or argon atmosphere, and the deaminated powder is heated to 500-800 °C according to a specified program, and maintained at that temperature for 30 min or longer, such that the tetravalent actinide nitrate and the tetravalent actinide oxalate in the deaminated powder are thermally decomposed to obtain various kinds of actinide nuclide oxides as corresponding AnO₂ type MOX fuel powders.

In some embodiments, in the first mixed actinide deep eutectic solvent formed, when the first actinide nuclide salt is a solid of plutonium nitrate pentahydrate and the second actinide nuclide salt is a solid of thorium(IV) oxalate hexahydrate, or alternatively the first actinide nuclide salt is a solid of thorium nitrate hexahydrate and the second actinide nuclide salt is a solid of plutonium(IV) oxalate hexahydrate, the MOX fuel powder is a (ThₓPu₁₋ₓ)O₂ type powder.

In the first mixed actinide deep eutectic solvent formed, when the first actinide nuclide salt and the second actinide nuclide salt are a solid of plutonium nitrate pentahydrate and a solid of thorium(IV) oxalate hexahydrate respectively, 0.0 < X ≤ 0.1; and when the different actinide nuclide salts are a solid of thorium nitrate hexahydrate and a solid of plutonium(IV) oxalate hexahydrate, 0.9 ≤ X < 1.0.

In the first mixed actinide deep eutectic solvent formed, when the first actinide nuclide salt is a solid of U(NO₃)₄·3-4H₂O and the second actinide nuclide salt is a solid of thorium(IV) oxalate hexahydrate, or alternatively the first actinide nuclide salt is a solid of thorium nitrate hexahydrate and the second actinide nuclide salt is a solid of U(IV) oxalate, the MOX fuel powder is a (UₓTh₁₋ₓ)O₂ type powder.

In the first mixed actinide deep eutectic solvent formed, when the first actinide nuclide salt and the second actinide nuclide salt are a solid of U(NO₃)₄·3-4H₂O and a solid of thorium(IV) oxalate hexahydrate respectively, 0.9 ≤ X < 1.0; and when the first actinide nuclide salt and the second actinide nuclide salt are a solid of thorium nitrate hexahydrate and a solid of U(IV) oxalate respectively, 0.0 < X ≤ 0.1.

In the first mixed actinide deep eutectic solvent formed, when the first actinide nuclide salt is a solid of U(NO₃)₄·3-4H₂O and the second actinide nuclide salt is a solid of plutonium(IV) oxalate hexahydrate, or alternatively the first actinide nuclide salt is plutonium nitrate pentahydrate and the second actinide nuclide salt is a solid of U(IV) oxalate, the MOX fuel powder is a (UₓPu₁₋ₓ)O₂ type powder.

In the first mixed actinide deep eutectic solvent formed, when the first actinide nuclide salt and the second actinide nuclide salt are a solid of U(NO₃)₄·3-4H₂O and a solid of plutonium(IV) oxalate hexahydrate respectively, 0.9 ≤ X < 1.0; and in the first mixed actinide deep eutectic solvent formed, when the first actinide nuclide salt and the second actinide nuclide salt are a solid of plutonium nitrate pentahydrate and a solid of U(IV) oxalate respectively, 0.0 < X ≤ 0.1.

In some embodiments, particular steps for preparing the first mixed actinide deep eutectic solvent may comprise: first placing 0.6180 g (0.990 mmol) of dried solid of thorium nitrate hexahydrate, 0.0492 g (0.096 mmol) of dried solid of thorium(IV) oxalate hexahydrate and 0.6218 g (10.353 mmol) of dried urea solid in a transparent glass bottle and mixing them, where the solid powder softens and liquefies gradually during the mixing; gently shaking the glass bottle to mix the sample thoroughly and homogeneously; heating the mixture on an electric heating plate at 80 to 100°C for about 5 to 10 min, after which there are a small amount of insoluble particles remained in the mixture; and adding 60 µL deionized water to the mixture and sonicating it for 5 min, such that the mixture becomes a completely clear liquid, thereby obtaining An(IV) type nitrate-oxalate mixed actinide deep eutectic solvent which can have an addition amount of An(IV) oxalate of 8.84 At%. With respect to the MOX fuel to be prepared (for example, a MOX fuel which is ThO₂ mixed with a small amount of PuO₂), the method provided in this embodiment is applicable to the preparation of a deep eutectic solvent from all mixed actinide raw materials of a tetravalent actinide nitrate mixed with a small amount of a tetravalent actinide oxalate (within 10%).

In the embodiments of the present application, the first mixed actinide deep eutectic solvent, a liquid at the room temperature, which is obtained by directly mixing three kinds of solids, i.e., a solid of plutonium nitrate pentahydrate (or thorium nitrate hexahydrate), thorium(IV) oxalate hexahydrate (or plutonium(IV) oxalate hexahydrate) and urea, at a certain proportion, is used as a mother liquor for preparing MOX fuel powders. As compared to the wet process where two kinds of actinide nuclide salts are first dissolved in solutions respectively and then coprecipitated under a certain condition, the method of the present application has simple procedure, fewer steps, and high efficiency, and does not generate any waste liquid. The MOX fuel powder may be obtained by decomposing the first mixed actinide deep eutectic solvent at a certain temperature, and thus only one equipment of a high temperature sintering atmosphere furnace is needed, without any other additional dedicated device. As compared to the dry process, the method of the present application has a simple operation, and does not need any additional device. The method of the present application can greatly simplify the process flow, and effectively reduce the production cost, thereby providing better economy and safety.

In some embodiments, when the various kinds of actinide nuclide oxides obtained in step S3 comprises a hexavalent actinide nuclide oxides, the preparation method further comprises: S4. heating the various kinds of actinide nuclide oxides obtained in step S3 to a third predetermined temperature and reducing the various kinds of actinide nuclide oxides to reduce the hexavalent actinide nuclide oxide to a tetravalent actinide nuclide oxide.

In some embodiments, the reduction may be carried out in a pure hydrogen atmosphere or in a mixed atmosphere of hydrogen and an inert gas. The third predetermined temperature for reduction may be 680°C or higher. In some embodiments, the third predetermined temperature is in a range from 680 to 900°C.

In some embodiments, in the reduction, the various kinds of actinide nuclide oxides obtained in step S3 is heated to 680-900°C according to a specified program in an argon atmosphere, and then maintained at that temperature for 10-30 min with the atmosphere switched to a mixed atmosphere of hydrogen-argon or a hydrogen atmosphere, to obtain MOX fuel powders.

In step S4, the expression "according to a specified program" means at a specified heating rate, and the specified heating rate is 5 to 10°C/min.

In some embodiments, two kinds of actinide nuclide salts are mixed with urea to form a mixed actinide deep eutectic solvent, wherein a first actinide nuclide salt is a hexavalent actinide nitrate, and a second actinide nuclide salt is a tetravalent actinide nitrate. In such embodiments, the mixed actinide deep eutectic solvent formed may be referred to as a second mixed actinide deep eutectic solvent.

In some embodiments, the first actinide nuclide salt for forming the second mixed actinide deep eutectic solvent is a solid of uranyl nitrate hexahydrate; and the second actinide nuclide salt is a solid of thorium nitrate hexahydrate or a solid of plutonium nitrate pentahydrate.

In some embodiments, in the second mixed actinide deep eutectic solvent formed, a molar ratio of the solid of uranyl nitrate hexahydrate to the solid of thorium nitrate hexahydrate may be any ratio. In some embodiments, in the second mixed actinide deep eutectic solvent formed, the molar ratio of the solid of uranyl nitrate hexahydrate to the solid of plutonium nitrate pentahydrate may be any ratio.

In a particular embodiment, in the second mixed actinide deep eutectic solvent formed, the molar ratio of the solid of uranyl nitrate hexahydrate to the solid of thorium nitrate hexahydrate is 1:1. In a particular embodiment, in the second mixed actinide deep eutectic solvent formed, the molar ratio of the solid of uranyl nitrate hexahydrate to the solid of plutonium nitrate pentahydrate is 1:1.

In the second mixed actinide deep eutectic solvent formed, when the first actinide nuclide salt and the second actinide nuclide salt are a solid of uranyl nitrate hexahydrate and a solid of thorium nitrate hexahydrate respectively, the denitrogenated powder is a powder of U₃O₈ and ThO₂; and when the first actinide nuclide salt and the second actinide nuclide salt are a solid of uranyl nitrate hexahydrate and a solid of plutonium nitrate pentahydrate respectively, the denitrogenated powder is a powder of U₃O₈ and PuO₂.

In some embodiments, in step S3, the denitrogenation is carried out in an air or argon atmosphere, the deaminated powder is heated to 500-800°C according to a specified program and kept at that temperature for 30 min or longer, such that the mixed actinide nitrates in the deaminated powder are thermally decomposed to obtain a denitrogenated powder as a corresponding powder of actinide nuclide oxides U₃O₈ and ThO₂, or a corresponding powder of actinide nuclide oxides U₃O₈ and PuO₂.

In the second mixed actinide deep eutectic solvent formed, when the first actinide nuclide salt and the second actinide nuclide salt are a solid of uranyl nitrate hexahydrate and a solid of thorium nitrate hexahydrate respectively, the MOX fuel powder is (UₓTₕ₁₋ₓ)O₂; and when the different actinide nuclide salts are a solid of uranyl nitrate hexahydrate and a solid of plutonium nitrate pentahydrate, the MOX fuel powder is (UₓPu₁₋ₓ)O₂; wherein 0.0 < X < 1.0.

In some embodiments, two kinds of actinide nuclide salts are mixed with urea to form a mixed actinide deep eutectic solvent, wherein a first actinide nuclide salt is a hexavalent actinide nitrate, and a second actinide nuclide salt is a tetravalent actinide oxalate. In such embodiments, the mixed actinide deep eutectic solvent formed may be referred to as a third mixed actinide deep eutectic solvent.

In some embodiments, the first actinide nuclide salt for forming the third mixed actinide deep eutectic solvent is a solid of uranyl nitrate hexahydrate; and the second actinide nuclide salt is a solid of thorium(IV) oxalate hexahydrate or a solid of plutonium(IV) oxalate hexahydrate.

In some embodiments, in the third mixed actinide deep eutectic solvent formed, a molar ratio of the first actinide nuclide salt to the second actinide nuclide salt is ≥ 95:5.

In a particular embodiment, in the third mixed actinide deep eutectic solvent formed, the molar ratio of the solid of uranyl nitrate hexahydrate to the solid of thorium(IV) oxalate hexahydrate is ≥ 95:5. In a particular embodiment, in the third mixed actinide deep eutectic solvent formed, the molar ratio of the solid of uranyl nitrate hexahydrate to the solid of plutonium(IV) oxalate hexahydrate is ≥ 95:5.

In the third mixed actinide deep eutectic solvent formed, when the first actinide nuclide salt and the second actinide nuclide salt are a solid of uranyl nitrate hexahydrate and a solid of thorium(IV) oxalate hexahydrate respectively, the denitrogenated/decarbonized powder is a powder of U₃O₈ and ThO₂; and when the first actinide nuclide salt and the second actinide nuclide salt are a solid of uranyl nitrate hexahydrate and a solid of plutonium(IV) oxalate hexahydrate respectively, the denitrogenated/decarbonized powder is a powder of U₃O₈ and PuO₂.

In some embodiments, in step S3, the denitrogenation/decarbonization is carried out in an air or argon atmosphere, the deaminated powder is heated to 650-800 °C according to a specified program and maintained at that temperature for 30 min or longer, such that the homogeneously mixed hexavalent actinide nitrate and tetravalent actinide oxalate in the deaminated powder are thermally decomposed to obtain a denitrogenated/decarbonized powder as a corresponding powder of actinide nuclide oxides U₃O₈ and ThO₂, or a corresponding powder of actinide nuclide oxides U₃O₈ and PuO₂.

In the third mixed actinide deep eutectic solvent formed, when the first actinide nuclide salt and the second actinide nuclide salt are a solid of uranyl nitrate hexahydrate and a solid of thorium(IV) oxalate hexahydrate respectively, the MOX fuel powder is (UₓTₕ₁₋ₓ)O₂; and when the different actinide nuclide salts are a solid of uranyl nitrate hexahydrate and a solid of plutonium(IV) oxalate hexahydrate, the MOX fuel powder is (UₓPu₁₋ₓ)O₂; wherein 0.95 ≤ X < 1.0.

By using the method for preparing MOX fuel powders provided in this embodiment, MOX powder particles of various sizes, shapes and types can be prepared as required. For example, by combining the method with processes such as a vibration dispersion process, a microfluid controlling process, a two phase dispersion process or an aerosol spraying process, monodispersed MOX microspheres with a controllable particle size in a range from 1 µm to 1 mm and a narrow particle size distribution range may be prepared, which may be used as a The tri-structural isotropic (TRISO) fuel and for other purposes. Thus, the method may be used as a novel, economical and green solution for preparing MOX microspheres. The solution for preparing MOX fuel powders can also be expanded to all the hexavalent /tetravalent actinide nitrate and tetravalent actinide oxalate systems.

The preparation method of the present invention will be further described by way of particular examples.

### Example 1

S1. Preparation of a first mixed actinide deep eutectic solvent: in an oxygen-free glove box, placing 0.5009 g (0.90-0.93 mmol) of dried solid of U(NO₃)₄·3-4H₂O, 0.0526 g (0.10 mmol) of dried solid of thorium(IV) oxalate hexahydrate and 0.5587 g (9.30 mmol) dried urea solid in a transparent glass bottle and mixing them, where the solid powder softens and liquefies gradually during the mixing; gently shaking the bottle glass to mix the sample thoroughly and homogeneously; heating the mixture on an electric heating plate at 80 to 100°C for about 5 to 10 min, after which the mixture becomes a completely clear liquid, thereby obtaining a nitrate-oxalate mixed actinide deep eutectic solvent with an addition amount of 9.97-10.3 At%.

S2. Deamination: transferring 20 µL nitrate-oxalate mixed actinide deep eutectic solvent to a crucible with a pipette, heating the nitrate-oxalate mixed actinide deep eutectic solvent to 150-160°C at a heating rate of 5-10°C/min in an argon atmosphere and maintaining it at that temperature for 30 min to remove the urea therein with a portion of nitrates removed from the actinide nitrate, to obtain a deaminated powder as a powder of different actinide nuclide salts and a portion of actinide nuclide oxides.

S3. Denitrogenation/Decarbonization: continuing to heating the above deaminated powder to 500-800°C at a heating rate of 5-10°C/min in an argon atmosphere and maintaining it at that temperature for 30 min or longer to sufficiently decompose the actinide nitrate and actinide oxalate of the different actinide nuclide salts in the deaminated powder, so as to obtain a denitrogenated/decarbonized powder as a (U_{0.9}Th_{0.1})O₂ type powder.

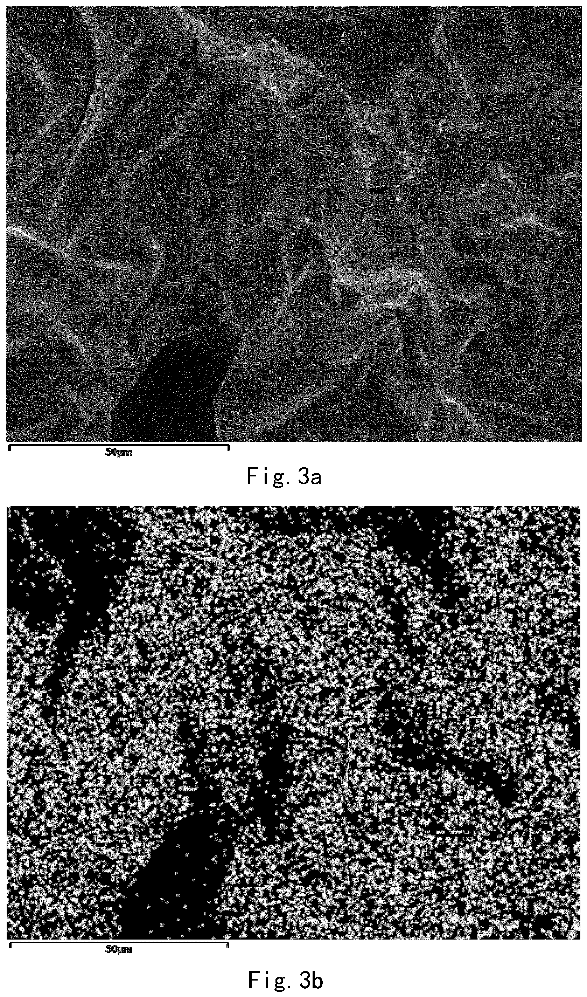

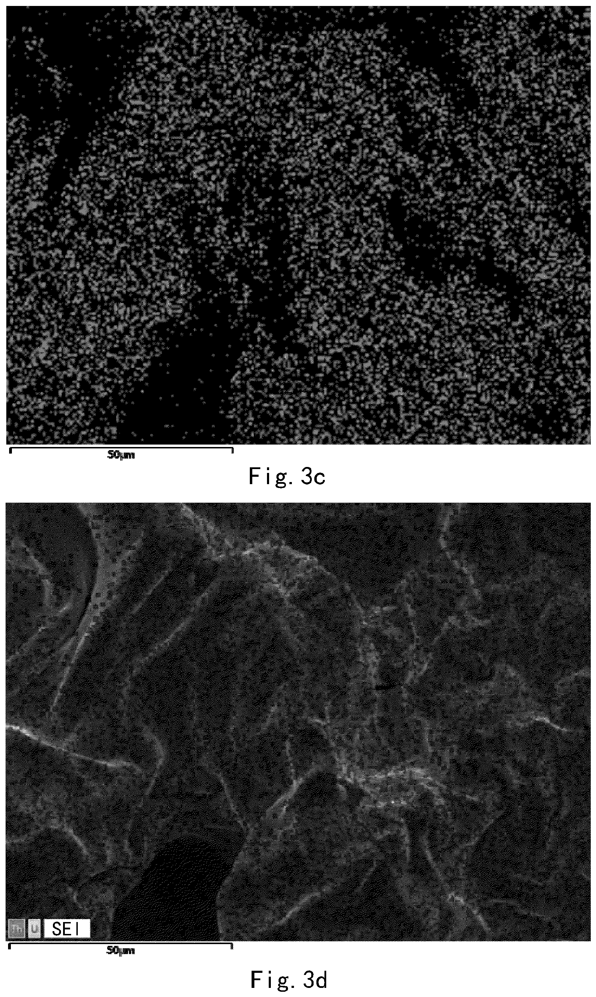

An elemental surface distribution analysis was performed on the MOX fuel powder obtained in Example 1 by a Scanning Electron Microscope(SEM)-Energy Dispersive X-Ray Spectroscopy (EDX), and the analysis results are shown in Fig. 3a to Fig. 3d. As can be seen from Fig. 3a to Fig. 3d, in the AnO₂ type MOX fuel powder prepared in Example 1, the particles of the powder of UO₂ and ThO₂ are homogeneously distributed, indicating that the AnO₂ type MOX fuel powder obtained in Example 1 has a good chemical composition homogeneity, and is homogeneously mixed even at the microscopic molecular level.

### Example 2

S1. Preparation of a second mixed actinide deep eutectic solvent: first placing 0.312 g (0.5 mmol) of dried solid of thorium nitrate hexahydrate, 0.251 g (0.5 mmol) of dried solid of uranyl nitrate hexahydrate and 0.5405 g (9 mmol) of dried urea solid in a transparent glass bottle and mixing them, where the solid powder softens and liquefies gradually during the mixing; gently shaking the glass bottle to mix the sample thoroughly and homogeneously; heating the mixture on an electric heating plate at 80 to 100°C for about 5 to 10 min, after which the mixture becomes a completely clear liquid, thereby obtaining a U(VI)/Th(IV) type mixed actinide deep eutectic solvent with a Th(IV) content of 50 At%.

S2. Deamination: transferring 20 µL U/Th type mixed actinide deep eutectic solvent to a crucible with a pipette, heating the U/Th type mixed actinide deep eutectic solvent to 150-160°C at a heating rate of 10°C/min in an air/argon atmosphere and maintaining it at that temperature for 30 min to remove the urea therein with a portion of nitrates removed from the actinide nitrate, to obtain a deaminated powder as a powder of different actinide nuclide salts and a portion of actinide nuclide oxides.

S3. Denitrogenation/Decarbonization: continuing to heating the above deaminated powder to 500-800°C at a heating rate of 10°C/min in an air/argon atmosphere and maintaining it at that temperature for 30 min or longer to sufficiently decompose the nitrates of the different actinide nuclide salts in the deaminated powder, so as to obtain a denitrogenated powder as a powder of U₃O₈ and ThO₂.

S4. Reduction: continuing to heating the powder of U₃O₈ and ThO₂ to 680-900°C at a heating rate of 10°C/min in an argon atmosphere, and then reducing it with the atmosphere switched to a 4% hydrogen-argon (V/V) mixed atmosphere (or a pure hydrogen atmosphere) for 10 to 15 min to obtain MOX fuel powders as a (U_{0.5}Th_{0.5})O₂ type powder.

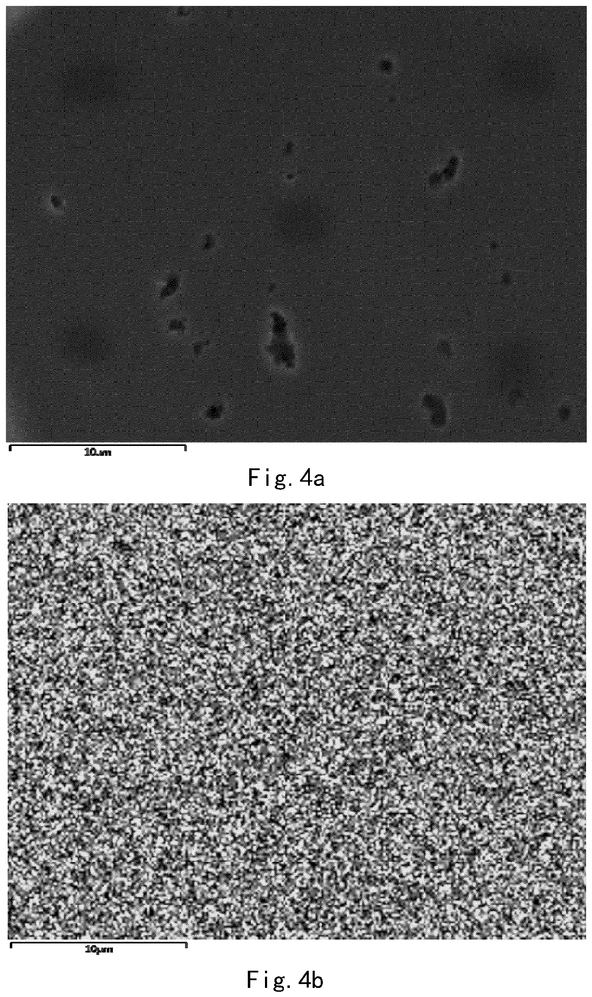

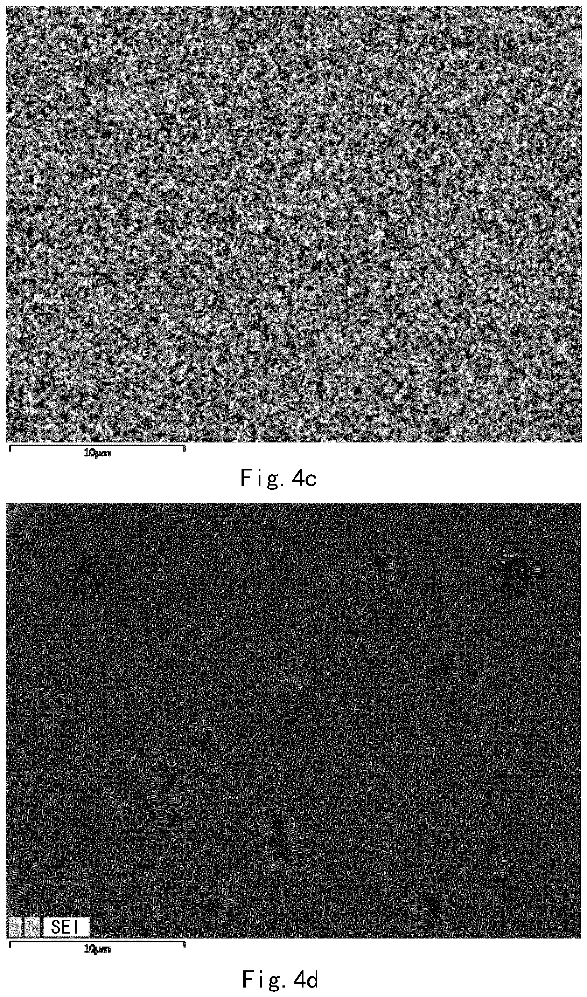

An elemental surface distribution analysis was performed on the MOX fuel powder obtained in Example 2 by a scanning electron microscope-energy spectroscopy, and the analysis results are shown in Fig. 4a to Fig. 4d. As can be seen from Fig. 4a to Fig. 4d, the powder of UO₂ and ThO₂ is homogeneously distributed in the MOX fuel powder prepared in Example 2, indicating that the MOX fuel powder prepared in Example 2 has a good chemical composition homogeneity, and is homogeneously mixed even at the microscopic molecular level.

### Example 3

S1. Preparation of a third mixed actinide deep eutectic solvent: first placing 0.0256 g (0.05 mmol) of dried solid of thorium(IV) oxalate hexahydrate, 0.477 g (0.95 mmol) of dried solid of uranyl nitrate hexahydrate and 0.5405 g (9 mmol) of dried urea solid in a transparent glass bottle and mixing them, gently shaking the glass bottle with sonicating to mix the sample thoroughly and homogeneously, where the solid powder softens and liquefies gradually during the mixing, and after about 5 to 10 min, the mixture becomes a completely clear liquid, thereby obtaining a U(VI)/Th(IV) type mixed actinide deep eutectic solvent with a Th(IV) content of 5 At%.

S2. Deamination: transferring 20 µL U/Th type mixed actinide deep eutectic solvent to a crucible with a pipette, heating the U/Th type mixed actinide deep eutectic solvent to 150-160°C at a heating rate of 5-10°C/min in an air/argon atmosphere and maintaining it at that temperature for 30 min to remove the urea therein, so as to obtain a deaminated powder as homogeneously mixed hexavalent actinide nitrate and tetravalent actinide oxalate.

S3. Denitrogenation/Decarbonization: continuing to heating the above deaminated powder to 650-800°C at a heating rate of 5-10°C/min in an air/argon atmosphere and maintaining it at that temperature for 30 min or longer to sufficiently decompose the homogeneously mixed hexavalent actinide nitrate and tetravalent actinide oxalate in the deaminated powder, so as to obtain a denitrogenated/decarbonized powder as a powder of U₃O₈ and ThO₂.

S4. Reduction: continuing to heating the powder of U₃O₈ and ThO₂ to 680-900°C at a heating rate of 5-10°C/min in an argon atmosphere, and then reducing it with the atmosphere switched to a 4% hydrogen-argon (V/V) mixed atmosphere (or a pure hydrogen atmosphere) for 10 to 15 min to obtain MOX fuel powders as a (U_{0.95}Th_{0.05})O₂ type powder.

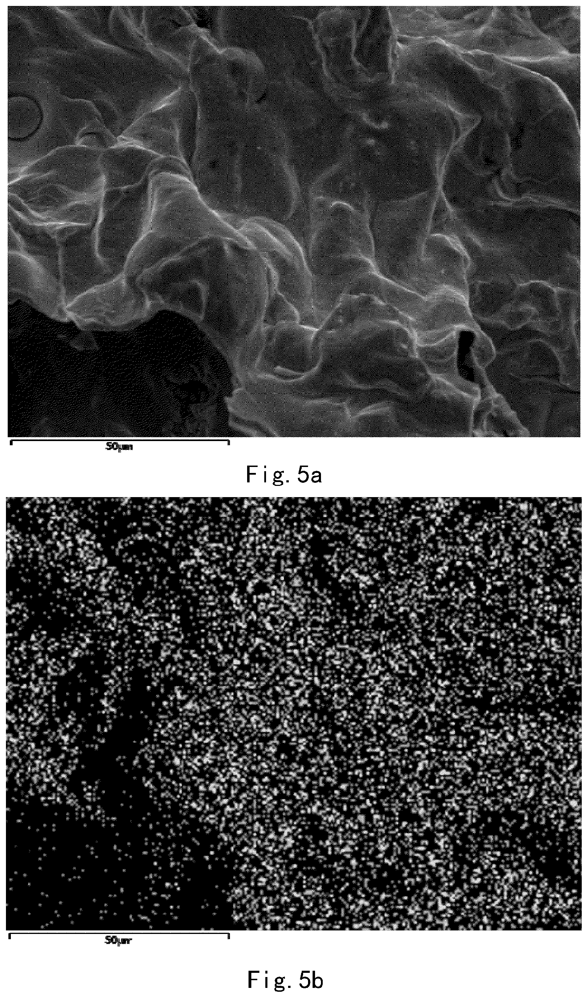

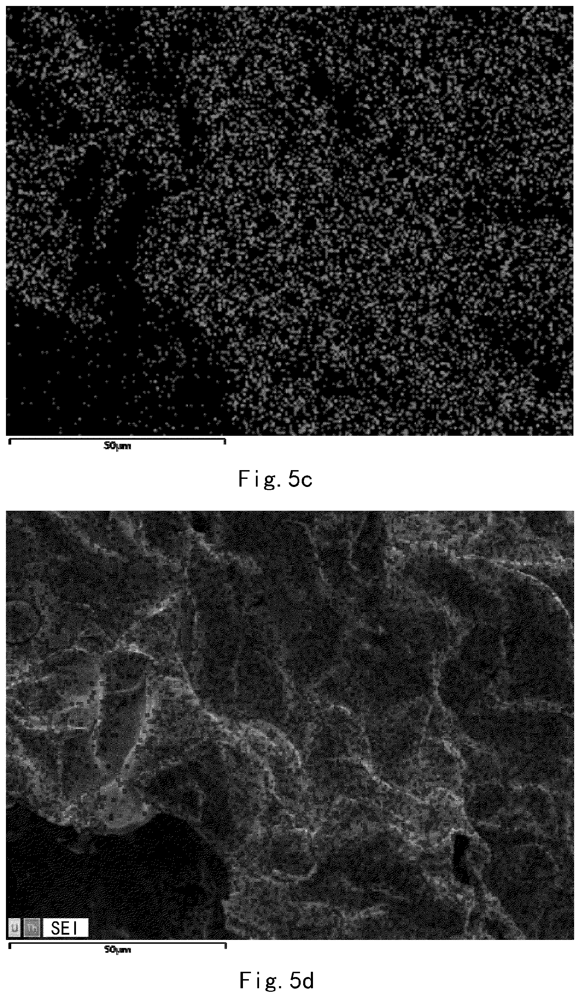

An elemental surface distribution analysis was performed on the MOX fuel powder obtained in Example 3 by a scanning electron microscope-energy spectroscopy, and the analysis results are shown in Fig. 5a to Fig. 5d. As can be seen from Fig. 5a to Fig. 5d, the powder of UO₂ and ThO₂ is homogeneously distributed in the MOX fuel powder prepared in Example 3, indicating that the MOX fuel powder prepared in Example 3 has a good chemical composition homogeneity, and is homogeneously mixed even at the microscopic molecular level.

Thus, in the embodiments of the present application, tetravalent/hexavalent actinide nitrates and tetravalent/hexavalent actinide oxalates are used together with urea to form a mixed actinide deep eutectic solvent, and then the mixed actinide deep eutectic solvent is subjected to deamination, denitrogenation, and decarbonization treatments. As a result, MOX fuel powders with a homogeneously mixed microscopic (molecular level) elemental composition can be obtained. In the method provided in the present invention, the raw materials are simple, where plutonium nitrate/thorium nitrate/U(VI) nitrate/U(IV) nitrate, plutonium(IV) oxalate/thorium(IV) oxalate/U(IV) oxalate, and the like are directly used as raw materials, which can greatly simplify the process for preparing MOX fuel powders of AnO₂ type ((ThₓPu₁₋ₓ)O₂, (UₓTh₁₋ₓ)O₂, (UₓPu₁₋ₓ)O₂, or the like), reduce the use of process reagents, and does not generate any process waste liquid. A simple method for preparing MOX fuel powders is provided, which has high efficiency, does not generate any waste liquid, is more economical and green, and can obtain a completely homogeneous MOX fuel powder.

It should also be noted that, for the embodiments of the present application, unless contradiction, the embodiments of the present application and the features in the embodiments can be combined with each other to obtain new embodiments.

The above descriptions are only particular embodiments of the present application, and the protection scope of the present application are not limited thereto. The protection scope of the present application should be defined by the following claims.

## Claims

1. A method for preparing MOX fuel powders comprising various kinds of actinide nuclide oxides, **characterized in that**, the method comprises steps of:
S1. mixing different actinide nuclide salts with urea to form a mixed actinide deep eutectic solvent, wherein the actinide nuclide salt is one selected from the group consisting of a hexavalent actinide nitrate, a tetravalent actinide nitrate, a hexavalent actinide oxalate, and a tetravalent actinide oxalate;
S2. heating the mixed actinide deep eutectic solvent obtained in step S1 to a first predetermined temperature to subject the mixed actinide deep eutectic solvent to a deamination treatment so as to remove the urea therein; and
S3. heating a product obtained after the deamination in step S2 to a second predetermined temperature to subject the product obtained in step S2 to a denitrogenation treatment and/or a decarbonization treatment so as to obtain various kinds of actinide nuclide oxides.

2. The method according to claim 1, **characterized in that**, when the various kinds of actinide nuclide oxides obtained in step S3 comprise a hexavalent actinide nuclide oxide, the method further comprises:
S4. heating the various kinds of actinide nuclide oxides obtained in step S3 to a third predetermined temperature and reducing the various kinds of actinide nuclide oxides to reduce the hexavalent actinide nuclide oxide to a tetravalent actinide nuclide oxide.

3. The method according to claim 1, **characterized in that**, the hexavalent actinide nitrate is a solid of uranyl nitrate hexahydrate;
the tetravalent actinide nitrate is a solid of thorium nitrate hexahydrate, a solid of plutonium nitrate pentahydrate, or a solid of U(NO₃)₄·3-4H₂O; and
the tetravalent actinide oxalate is a solid of thorium(IV) oxalate hexahydrate, a solid of plutonium(IV) oxalate hexahydrate, or a solid of U(IV) oxalate.

4. The method according to claim 1, **characterized in that**, in the mixed actinide deep eutectic solvent, a molar ratio of metal ions of all the actinide nuclide salts to urea is 1:4 or 1:9.

5. The method according to claim 1, **characterized in that**, in step S1, after the different actinide nuclide salts are mixed with urea, the mixed actinide nuclide salts and urea are formed into a completely clear liquid by at least one of shaking, stirring, grinding, sonicating and heating.

6. The method according to claim 1, **characterized in that**, in step S2, the first predetermined temperature is 150 to 160°C.

7. The method according to claim 1, **characterized in that**, in step S3, the second predetermined temperature is 500°C or higher.

8. The method according to claim 1, **characterized in that**, in step S1, two kinds of actinide nuclide salts are mixed with urea to form the mixed actinide deep eutectic solvent, wherein a first actinide nuclide salt is a hexavalent actinide nitrate, and a second actinide nuclide salt is a tetravalent actinide oxalate.

9. The method according to claim 8, **characterized in that**, the first actinide nuclide salt is a solid of uranyl nitrate hexahydrate; and the second actinide nuclide salt is a solid of thorium(IV) oxalate hexahydrate or a solid of plutonium(IV) oxalate hexahydrate.

10. The method according to claim 9, **characterized in that**, a molar ratio of the first actinide nuclide salt to the second actinide nuclide salt is ≥ 95:5.

11. The method according to claim 1, **characterized in that**, in step S1, two kinds of actinide nuclide salts are mixed with urea to form the mixed actinide deep eutectic solvent, wherein a first actinide nuclide salt is a hexavalent actinide nitrate, and a second actinide nuclide salt is a tetravalent actinide nitrate.

12. The method according to claim 11, **characterized in that**, the first actinide nuclide salt is a solid of uranyl nitrate hexahydrate; and the second actinide nuclide salt is a solid of thorium nitrate hexahydrate or a solid of plutonium nitrate pentahydrate.

13. The method according to claim 1, **characterized in that**, in step S1, two kinds of actinide nuclide salts are mixed with urea to form the mixed actinide deep eutectic solvent, wherein a first actinide nuclide salt is a tetravalent actinide nitrate, and a second actinide nuclide salt is a tetravalent actinide oxalate.

14. The method according to claim 13, **characterized in that**, the first actinide nuclide salt is a solid of plutonium nitrate pentahydrate, a solid of thorium nitrate hexahydrate, or a solid of U(NO₃)₄·3-4H₂O; and the second actinide nuclide salt is a solid of thorium(IV) oxalate hexahydrate, a solid of plutonium(IV) oxalate hexahydrate or a solid of U(IV) oxalate.
